# EUROPEAN PATENT APPLICATION

(11) **EP 4 760 005 A1**
(43) Date of publication of application: **17.06.2026**
(21) Application number: 24865314.9
(22) Date of filing: 03.09.2024
(51) Int. Cl.: E02F 9/20, E02F 9/26

(54) **WORK MACHINE**

(30) Priority: 14.09.2023 JP 2023149516
(71) Applicant: Hitachi Construction Machinery Co., Ltd., Tokyo 110-0015 (JP)
(72) Inventor: KAMEOKA, Ryota, Tsuchiura-shi, Ibaraki 300-0013 (JP); OGURA, Kohei, Tsuchiura-shi, Ibaraki 300-0013 (JP)
(74) Representative: Manitz Finsterwald Patent- und Rechtsanwaltspartnerschaft mbB
(86) International application number: PCT/JP2024/031585
(87) International publication number: WO 2025/057812

(57) **Abstract**

A work machine includes a body (1, 2) and a front work implement (3) equipped with a bucket (7), and the front work implement includes a thumb attachment (8) that cooperates with the bucket to hold an object. The work machine includes a hydraulic pump (19, 20), a bucket cylinder (11), a thumb cylinder (12), a bucket operation device (14), a bucket directional control valve (21), a thumb attachment operation device (15), a thumb attachment directional control valve (22), and a controller (13). The controller controls the thumb attachment directional control valve so that the operation of the thumb attachment is linked to the operation of the bucket only while the operation signal of the bucket is being input by the bucket operation device, when the automatic mode in which the operation of the thumb attachment is automatically controlled is set.

## Description

### Technical Field

The present invention relates to work machines such as hydraulic excavators, and is particularly suitable for work machines equipped with thumb attachments.

### Background Art

In work machines such as hydraulic excavators, there are cases where thumb attachments are used. A thumb attachment is an attachment that works in conjunction with a bucket to hold an object, similar to a human thumb. For example, it is used to hold objects such as rocks, concrete, logs, and branches. The thumb attachment is equipped with claws at its tip and is composed of a lid body that covers the opening of the bucket. The thumb attachment is rotatably mounted at the end of the arm, and by supplying hydraulic fluid to the thumb attachment cylinder, which is additionally installed separately from the arm cylinder, the rod extends and retracts, allowing the thumb attachment to rotate at the end of the arm and grab objects between it and the bucket.

When changing the posture of the bucket while grabbing an object with the bucket and thumb attachment and lowering it to a specific location, it is necessary to operate the thumb attachment to follow the bucket in addition to the bucket operation. If the operating speed of the thumb attachment is too fast relative to the bucket operation, there is a risk of crushing the object, and if the speed is too slow, there is a risk of dropping the object, thus requiring skilled operation techniques.

Therefore, patent document 1 discloses a configuration in which, by pressing a switch, the thumb attachment automatically approaches the bucket to grab the object, and the thumb attachment cylinder is controlled to maintain a preset pressure, allowing the thumb attachment to while maintaining pressure with only bucket operation.

### Citation List

### Patent Literature

Patent Literature 1: U.S. Patent No. 6385870

### Summary of the Invention

### Technical Problem

However, in the technology disclosed in patent literature 1, while the thumb attachment is being automatically controlled by pressing a switch, hydraulic fluid continues to be supplied to the thumb attachment cylinder even if the bucket is not being operated. Therefore, since the state where pressure acts on the thumb attachment cylinder is maintained, it affects fuel efficiency.

Accordingly, the present invention aims to provide a work machine that can improve fuel efficiency when the thumb attachment is not in operation.

### Solution to Problem

To achieve the above object, a work machine according to one aspect of the present invention includes a body and a front work implement attached to the body and equipped with at least a bucket, wherein the front work implement includes a thumb attachment that cooperates with the bucket to hold an object. The work machine also includes a hydraulic pump that supplies hydraulic fluid, a bucket cylinder that drives the bucket by a discharge pressure from the hydraulic pump to drive the bucket, a thumb cylinder that drives the thumb attachment by the discharge pressure from the hydraulic pump to drive the thumb attachment, a bucket operation device to operate the bucket, a bucket directional control valve that switches an operation direction of the bucket based on an operation signal from the bucket operation device, a thumb attachment operation device to operate the thumb attachment, a thumb attachment directional control valve that switches an operation direction of the thumb attachment based on an operation signal from the thumb attachment operation device, and a controller with an automatic mode in which an operation of the thumb attachment is automatically controlled in conjunction with an operation of the bucket. The controller controls the thumb attachment directional control valve so that the operation of the thumb attachment is linked with the operation of the bucket only while the operation signal of the bucket is being input by the bucket operation device, in a case the automatic mode in which the operation of the thumb attachment is automatically controlled is set.

### Advantageous Effects of Invention

According to the work machine of the present invention, it is possible to improve fuel efficiency when the thumb attachment is not in operation. Other problems, configurations, and effects not mentioned above will be clarified by the description of the embodiments below.

### Brief Description of Drawings

[Fig. 1] Fig. 1 is a diagram showing the appearance of a hydraulic excavator, which is an example of a work machine according to the present invention.
[Fig. 2] Fig. 2 is a hydraulic system configuration diagram of the hydraulic excavator.
[Fig. 3] Fig. 3 is a diagram showing the electrical configuration of the thumb operation control section that controls the operation of the thumb.
[Fig. 4] Fig. 4 is a flowchart showing the entire process of the thumb operation control section.
[Fig. 5] Fig. 5 is a flow diagram representing the calculation process of the relief valve command current v4 by the thumb operation control section.
[Fig. 6] Fig. 6 is a flowchart showing the process defined in step S2 of Fig. 5.
[Fig. 7] Fig. 7 is a hydraulic system configuration diagram of a hydraulic excavator according to a modification example.
[Fig. 8] Fig, 8 is a diagram showing the electrical configuration of the thumb operation control section according to a modification example.
[Fig. 9] Fig. 9 is a flowchart showing the entire process of the thumb operation control section according to a modification example.

### Description of Embodiments

The embodiments of the present invention will be described below with reference to the drawings.

### (Description of the Hydraulic Excavator)

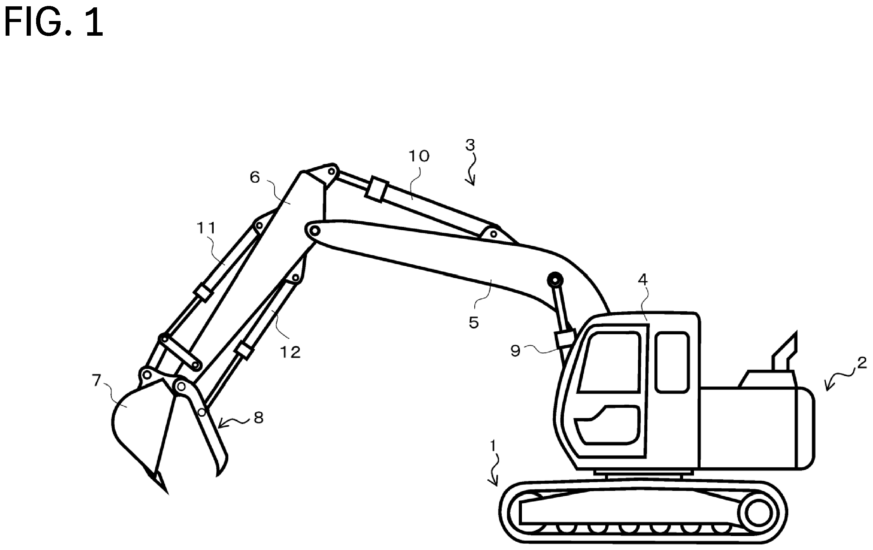

Fig. 1 is a diagram showing the appearance of a hydraulic excavator, which is an example of a work machine according to the present invention. In Fig. 1, the hydraulic excavator (work machine) is schematically composed of a crawler-type undercarriage 1, an upper structure 2 mounted to be swingable relative to the undercarriage 1, and a front work implement 3 equipped with excavation means and the like.

The undercarriage 1 is equipped with a pair of left and right travel hydraulic motors (not shown), and each crawler is independently driven to rotate by these travel hydraulic motors and their reduction mechanisms, allowing travel forward or backward.

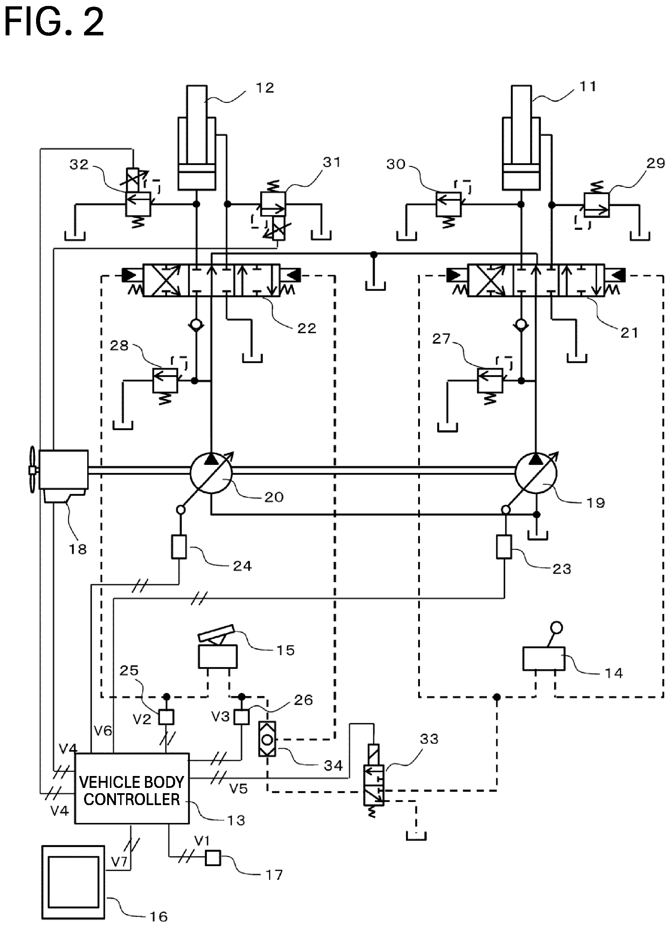

The upper structure 2 is equipped with an operating room 4 where operation devices for various operations of the hydraulic excavator (such as a bucket control lever 14 and a thumb operation pedal 15 / see Fig. 2) and an operator's seat are arranged, as well as a prime mover such as an engine 18, pumps 19, 20, and a swing motor (not shown). The upper structure 2 is swung to the right or left direction relative to the undercarriage 1 by this swing motor. Inside the operating room 4, a monitor 16 (see Fig. 2) is installed to display various instruments and main body information so that the operator can check the status of the hydraulic excavator.

The front work implement 3 is equipped with multiple driven members (boom 5, arm 6, bucket 7, and thumb attachment 8) that each rotate in the vertical direction. The base end of the boom 5 is rotatably supported at the front of the upper structure 2 via a boom pin. The arm 6 is rotatably connected to the tip of the boom 5 via an arm pin, and the bucket 7 and thumb attachment 8 (hereinafter abbreviated as thumb 8) are rotatably connected to the tip of the arm 6 via a bucket pin. The boom 5 is driven by a boom cylinder 9, the arm 6 is driven by an arm cylinder 10, the bucket 7 is driven by a bucket cylinder 11, and the thumb 8 is driven by a thumb cylinder 12.

### (System Configuration)

Fig. 2 is a hydraulic system configuration diagram of the hydraulic excavator. As shown in Fig. 2, the hydraulic excavator is equipped with a vehicle body controller 13, control levers for various operations (in Fig. 2, only the bucket control lever 14 for operating the bucket 7 and the thumb operation pedal 15 for operating the thumb 8 are shown), a monitor 16 that displays the vehicle body status, and a switch 17 that starts the automatic control of the thumb 8. The switch 17 is attached to the head of the bucket control lever 14 for operability, but the mounting position of the switch 17 is not limited to this.

The hydraulic excavator is equipped with an engine 18 as a prime mover. The engine 18 drives pumps 19 and 20, and the hydraulic fluid discharged from pumps 19 and 20 passes through each control valve that controls the flow direction and flow rate, and is supplied to actuators such as the boom cylinder 9, arm cylinder 10, bucket cylinder 11, thumb cylinder 12, swing motor, and travel motor. In Fig. 2, as a representative of the control valves, the control valve 21 for the bucket cylinder 11 and the control valve 22 for the thumb cylinder 12 are illustrated. Moreover, as a representative of actuators, the bucket cylinder 11 and the thumb cylinder 12 are illustrated.

Pumps 19, 20 are variable displacement hydraulic pumps, and pump regulators 23, 24 are installed on pumps 19, 20. Pump regulators 23, 24 are configured to include a pump flow control solenoid valve and a pump tilting control mechanism, and control the discharge flow rate of each pump 19, 20 according to commands output from the vehicle body controller 13.

The bucket control lever 14 and the thumb operation pedal 15 are pilot valves. According to the operation pressure output from the bucket control lever 14 and the thumb operation pedal 15, the spools of control valves 21, 22 operate, thereby adjusting the flow of hydraulic fluid discharged from pumps 19, 20. This allows for the operation of the bucket 7 and the thumb 8. The bucket control lever 14 may be a hydraulic lever or an electric lever. Instead of the thumb operation pedal 15, levers or switches for operating the thumb 8 may be installed.

The thumb operation pedal 15 is equipped with pressure sensors 25, 26 that measure the operation pressure for thumb opening and closing. Pressure sensors 25, 26 are electrically connected to the vehicle body controller 13 and output operation pressure information to the vehicle body controller 13.

The circuit between pumps 19, 20 and control valves 21, 22 is equipped with main relief valves 27, 28, which allow tank hydraulic fluid to flow when the circuit pressure during actuator operation reaches a set value, preventing the pressure in the circuit from exceeding the set value.

The circuit between control valve 21 and bucket cylinder 11 is equipped with overload relief valves 29, 30, which allow tank hydraulic fluid to flow when the cylinder pressure due to external force reaches a set value, preventing the pressure in the circuit from exceeding the set value.

The circuit between control valve 22 and thumb cylinder 12 is equipped with overload relief valves 31, 32, which allow tank hydraulic fluid to flow when the cylinder pressure due to external force reaches a set value, preventing the pressure in the circuit from exceeding the set value. Additionally, overload relief valves 31, 32 are equipped with solenoid valves and are electrically connected to the vehicle body controller 13, allowing the vehicle body controller 13 to adjust the set value (set pressure) of the relief pressure.

The circuit between the bucket control lever 14 and the thumb operation pedal 15 is equipped with a switching solenoid valve 33 and a shuttle valve 34. The switching solenoid valve 33 is electrically connected to the vehicle body controller 13, and its position is switched by commands from the vehicle body controller 13, allowing the circuit between the bucket control lever 14 and the thumb operation pedal 15 to be switched between cutting off and communication. The shuttle valve 34 selects the operation pressure from the bucket control lever 14 and the thumb operation pedal 15, and connects the higher operation pressure to control valve 22.

The vehicle body controller 13 is configured with a CPU, RAM, ROM, HDD, input I/F, and output I/F connected to each other via a bus. In such a hardware configuration, the CPU reads out a calculation program (software) stored in a recording medium such as ROM, HDD, or an optical disc, expands it on RAM, and executes the expanded calculation program. This allows the calculation program and hardware to work together to realize the functions of the vehicle body controller 13, such as the automatic control of the thumb 8 described below.

### (Thumb Operation Control Section)

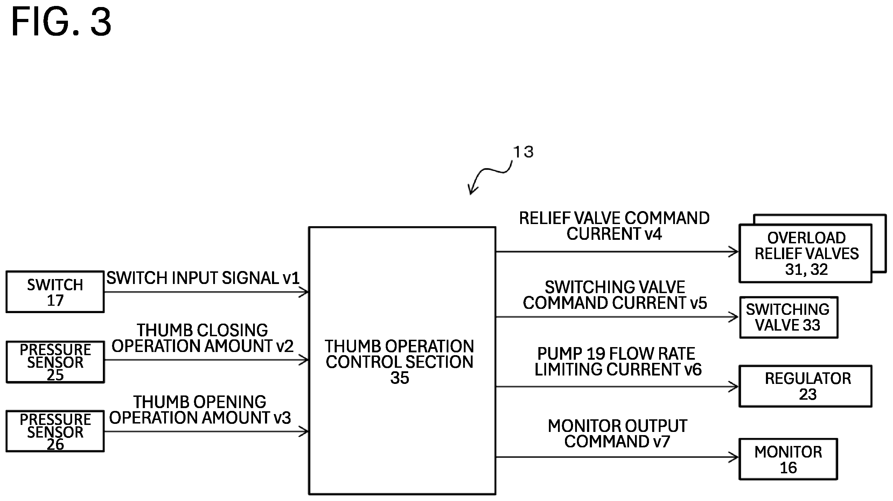

FIG. 3 is a diagram showing the electrical configuration of the thumb operation control section 35 that controls the operation of the thumb 8.

As shown in FIG. 3, the control section of the vehicle body controller 13 is installed with a thumb operation control section 35 for automatically controlling the thumb operation with only bucket operation after the bucket 7 and thumb 8 have grabbed an object. The thumb operation control section 35 receives input signals v1 from switch 17, thumb closing operation pressure v2 from pressure sensor 25, and thumb opening operation pressure v3 from pressure sensor 26. Based on these inputs, the thumb operation control section 35 performs various calculations and outputs, as command values, a relief valve command current v4 to send commands to overload relief valves 31, 32, a switching valve command current v5 to send commands to switching solenoid valve 33, a pump 19 flow rate limiting current v6 to send commands to pump regulator 23, and a monitor output command v7 to send commands to monitor 16.

### (Processing for Adjusting the Relief Pressure of the Thumb Cylinder)

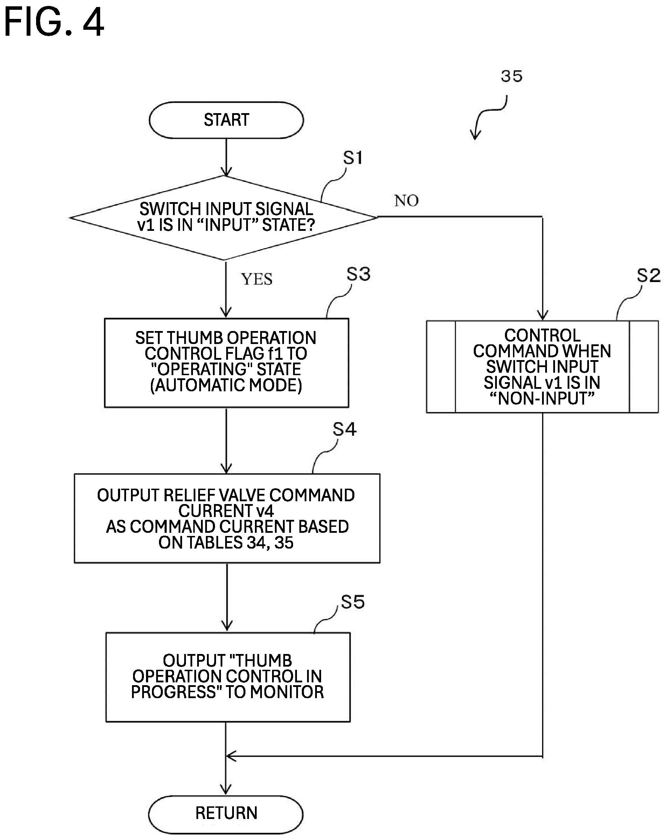

FIG. 4 is a flowchart showing the entire processing of the thumb operation control section 35.

As shown in FIG. 4, first, the thumb operation control section 35 determines whether the input signal v1 from switch 17 is in the "input" state (S1). Although not shown, while switch 17 is pressed, the input signal v1 outputs a signal in the "input" state, and when not pressed, it outputs a signal in the "non-input" state. If the input signal v1 is not in the "input" state (S1/NO), the thumb operation control section 35 transitions to the control command flow for when the switch input signal v1 is in the "non-input" state (S2). If the input signal v1 is in the "input" state (S1/YES), the thumb operation control section 35 sets the thumb operation control flag f1 to the "operating" state and switches to automatic mode (S3). Next, the relief valve command current v4 is calculated based on tables 36, 37 and output as a command current (S4).

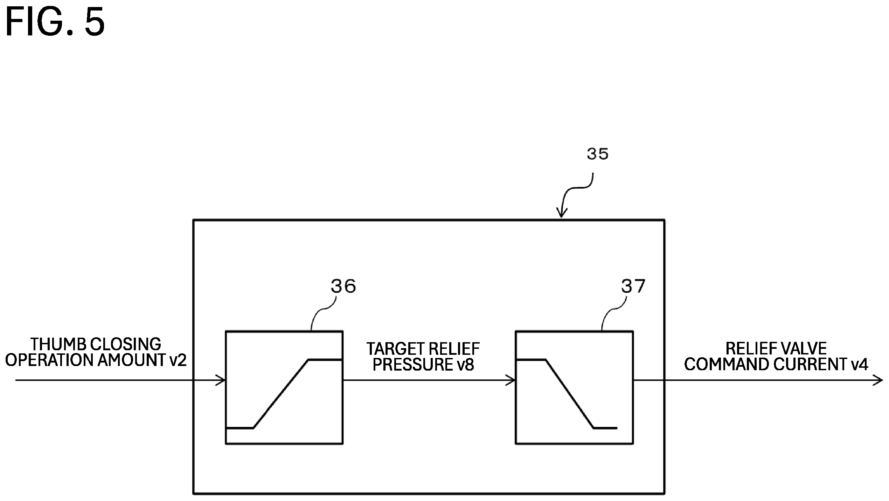

The output of the relief valve command current v4 in step S4 is calculated according to the processing shown in FIG. 5. FIG. 5 is a flow diagram representing the calculation processing of the relief valve command current v4 by the thumb operation control section 35. In FIG. 5, the horizontal axis of table 36 represents the operation amount, the vertical axis represents the relief pressure, and the horizontal axis of table 37 represents the relief pressure, while the vertical axis represents the command current.

When the thumb closing operation pressure v2 is input, it is converted into a target relief pressure v8 corresponding to the operation pressure v2 by the "thumb closing operation pressure-target relief pressure" table 36. Furthermore, the target relief pressure v8 is converted into a relief valve command current v4 corresponding to the target relief pressure v8 by the "target relief pressure-target output" table 37. This processing outputs the relief valve command current v4.

Returning to FIG. 4, in the next step S5, to notify that the pressure adjustment of the thumb 8 is in progress, the thumb operation control section 35 outputs a monitor output command v7 to display on monitor 16 that it is "under thumb operation control" (i.e., in automatic mode), and returns the process.

In this way, by performing the processing shown in FIG. 4, after the bucket 7 and thumb 8 have grabbed an object, the relief pressure (set pressure) of the overload relief valves 31, 32 can be adjusted according to the operation pressure by performing pedal operation of the thumb operation pedal 15 while pressing switch 17. This allows the pressure necessary for holding the object to be adjusted with only the pedal operation of switch 17 and thumb operation pedal 15, eliminating the need to set the pressure value in advance for the object.

### (Operation and Cancellation of Thumb Operation Control)

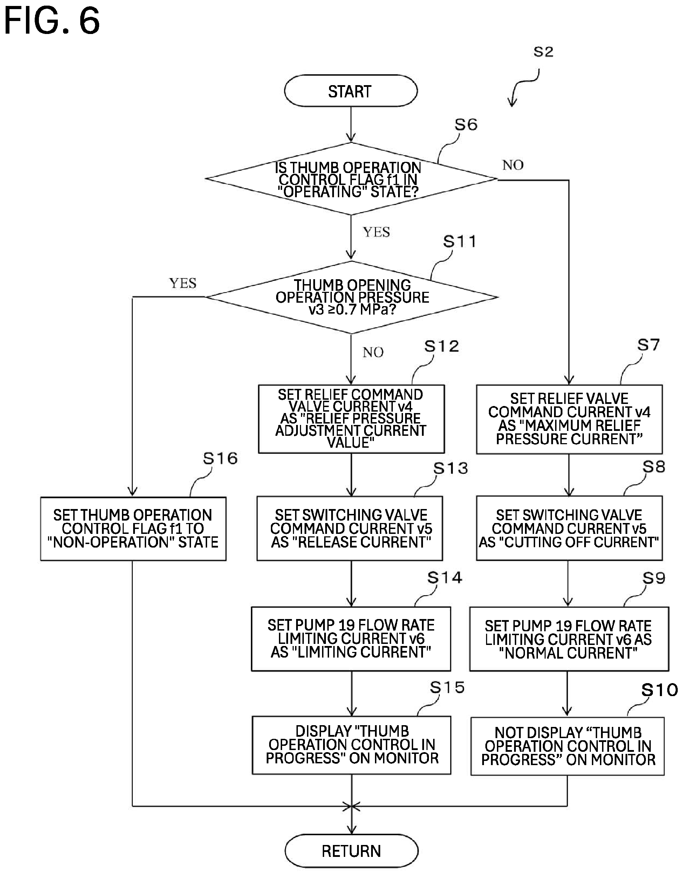

FIG. 6 is a flowchart showing the processing defined in step S2 of FIG. 4.

First, the thumb operation control section 35 determines whether the thumb operation control flag f1 is "operation" (S6), and if not "operation," proceeds to step S7, and if "operation," proceeds to step S11. The processing from step S7 to step S10 is the flow in the normal state where the thumb operation control is not operated, i.e., the automatic control of the thumb 8 is canceled.

In step S7, the thumb operation control section 35 outputs the relief valve command current v4 as the "maximum relief pressure current," setting the overload relief valves 31, 32 to the maximum relief pressure In step S8, the thumb operation control section 35 outputs the switching valve command current v5 as the "cutting off current," cutting off the circuit between the bucket control lever 14 and the thumb operation pedal 15.

In step S9, the thumb operation control section 35 outputs the pump 19 flow rate limiting current v6 as the "normal current," setting the pump flow rate for normal operation when the thumb operation control is not operated. Additionally, in step S10, the thumb operation control section 35 outputs the monitor output command v7 as "not displayed," setting monitor 16 to the normal screen state, and returns the process.

With this process, normal operation is possible when switch 17 is not pressed and the thumb operation control is not operated.

On the other hand, when the thumb operation control flag f1 is in the ""operation"" state (S6/YES), it is determined whether the thumb opening operation pressure v3 is 0.7 MPa (threshold) or more (S11), and if it is less than 0.7 MPa (S11/NO), it proceeds to step S12, and if it is 0.7 MPa or more (S11/YES), it proceeds to step S16.

If the thumb operation pedal 15 is not operated in the direction in which the thumb 8 opens, it is determined as NO in step S11, and proceeds to step S12. The process from step S12 to step S15 is a flow in the state where the thumb operation control is operated (in automatic mode). In this embodiment, the threshold for determining whether the thumb operation pedal 15 is operated in the direction in which the thumb 8 opens is set to 0.7 MPa, but the threshold value can be set arbitrarily as long as it is a value that can determine the presence or absence of the pedal operation.

In step S12, the thumb operation control section 35 outputs the relief valve command current v4 as the "relief pressure adjustment current value". The "relief pressure adjustment current value" is the current value of the final relief pressure adjusted in step S4 of FIG. 5. Next, in step S13, the thumb operation control section 35 outputs the switching valve command current v5 as the "release current" and communicates the circuit between the bucket control lever 14 and the thumb operation pedal 15.

In step S14, the thumb operation control section 35 outputs the pump 19 flow rate limiting current v6 as the "limiting current" to limit the flow rate of pump 19. Also, in step S10, the thumb operation control section 35 outputs the monitor output command v7 as "thumb control in operation", displays "thumb operation control in progress" on monitor 16, and returns the process.

With this process, the circuit between the bucket control lever 14 and the thumb operation pedal 15 is communicated, so that, for example, the thumb 8 operates in conjunction with the bucket dump operation while holding the object. Since the load pressure of the thumb cylinder 12 is lower than that of the bucket cylinder 11, in the case of bucket crowd operation, the thumb 8 operates in conjunction even if the circuit on the bucket crowd side and the thumb cylinder 12 are not communicated. Also, since the automatic control of the thumb 8 is performed just by communicating the circuit between the bucket control lever 14 and the thumb operation pedal 15, the thumb 8 does not operate when the bucket is not operated. Therefore, the thumb 8 does not continue to operate automatically when the bucket is not operated.

Furthermore, during thumb operation control (automatic control of thumb 8), the bucket operation is restricted by limiting the flow rate of pump 19, and bucket 7 operates away from thumb 8, preventing the object from falling. In addition, by setting the pressure acting on the thumb cylinder 12 to the adjusted pressure, bucket 7 and thumb 8 can be operated in conjunction without crushing the object.

On the other hand, in step S11, if the thumb operation pedal 15 is operated in the direction in which the thumb 8 moves away from bucket 7, it proceeds to step S16. In this step S16, the thumb operation control section 35 sets the thumb operation control flag f1 to the "non-operation" state and returns the process. With this process, if the operator operates thumb 8 in the direction away from bucket 7 during thumb operation control, the thumb operation control is automatically canceled, and normal operation can be performed as long as switch 17 is not input thereafter.

### (Effect)

As described above, according to this embodiment, when holding (gripping) an object with bucket 7 and thumb 8, there is no need to select the pressure required to hold the object in advance, and the necessary pressure can be adjusted only by operating switch 17 and bucket control lever 14. Also, by restricting the flow rate of pump 19 to limit the bucket speed, it is possible to change the posture of bucket 7 without the bucket 7 moving away from thumb 8 and causing the object to fall. Furthermore, since the control to hold the object operates only during bucket operation while thumb control is operated, it is possible to suppress the deterioration of fuel efficiency when the bucket is not operated. Moreover, since the thumb operation control can be canceled simply by operating thumb 8 in the direction away from bucket 7 during thumb operation control, it is possible to omit the task of canceling the thumb operation control (automatic mode) by deliberately pressing switches. Therefore, the operability for the operator is improved, and it is user-friendly.

### (Modification Example)

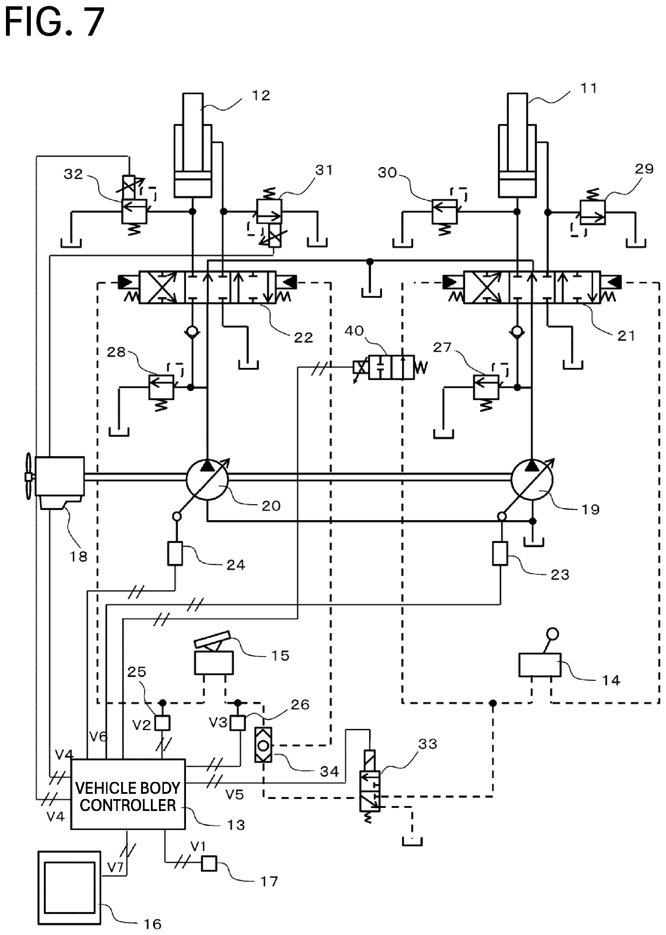

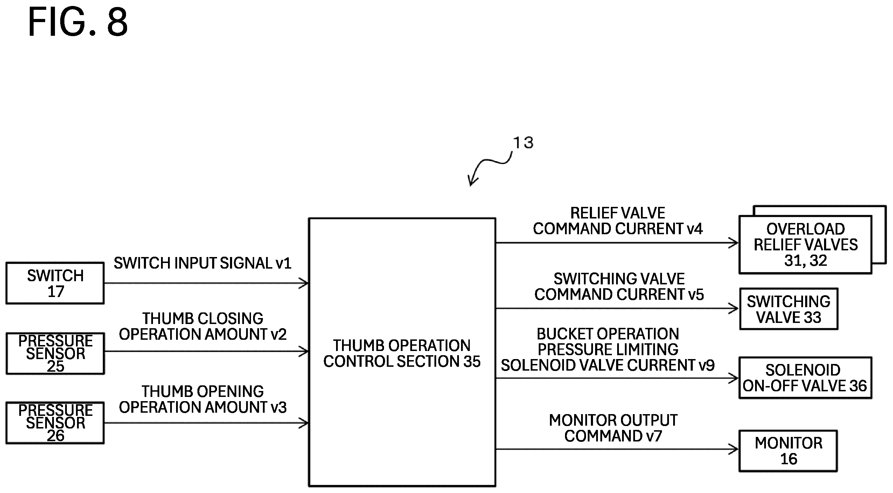

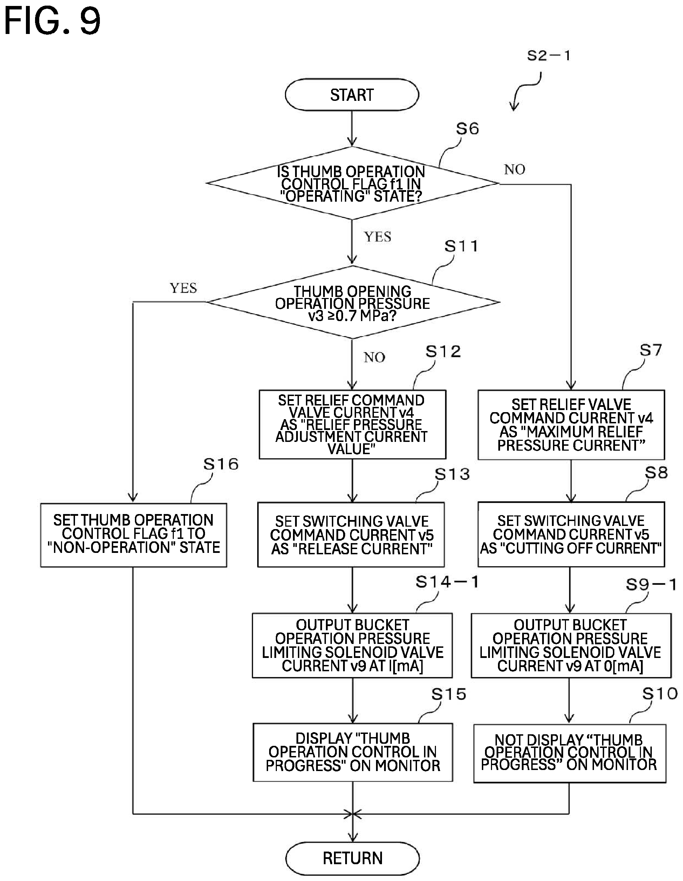

Next, a modification example of the above-described embodiment will be explained. FIG. 7 is a hydraulic system configuration diagram of a hydraulic excavator according to the modification example, FIG. 8 is a diagram showing the electrical configuration of the thumb operation control section according to the modification example, and FIG. 9 is a flowchart showing the entire process of the thumb operation control section according to the modification example.

The feature of the modification example is that the bucket speed is limited by narrowing the opening of control valve 21, instead of limiting the discharge flow rate of pump 19 in step S14 of FIG. 6. Specifically, in this modification example, as shown in FIG. 7, a proportional solenoid on-off valve 40 is installed in the pilot circuit between the bucket control lever 14 and the control valve 21. The solenoid on-off valve 40 opens and closes based on commands from the vehicle body controller 13 and is controlled to a predetermined opening.

As shown in FIG. 8, the thumb operation control section 35 outputs the bucket operation pressure limiting solenoid valve current v9 to the solenoid on-off valve 40 based on input signals from switch 17 and pressure sensors 25, 26. The solenoid on-off valve 40 opens and closes based on the current value of the bucket operation pressure limiting solenoid valve current v9, moving the spool of control valve 21 to a predetermined position. Since the flow rate of hydraulic fluid supplied to the bucket cylinder 11 changes according to the spool position of control valve 21, controlling the solenoid on-off valve 40 can limit the bucket speed.

As shown in FIG. 9, when the thumb operation control flag f1 is not in the "operation" state (S6/NO), that is, in the normal state, the thumb operation control section 35 outputs the bucket operation pressure limiting solenoid valve current v9 at 0mA in step S9-1. Then, the solenoid on-off valve 40 is fully opened, and hydraulic fluid from pump 19 is supplied to the bucket cylinder 11 according to the operation of the bucket control lever 14. Therefore, the bucket speed is not limited.

On the other hand, in a case the thumb operation control flag f1 is in the "operation" state (S6/YES), that is, during thumb operation control (in automatic mode), the bucket operation pressure limiting solenoid valve current v9 is output at ImA in step S14-1. Then, the opening of the solenoid on-off valve 40 is restricted according to the current value I, and the spool of control valve 21 is narrowed. Therefore, the flow rate of hydraulic fluid supplied from pump 19 decreases, and the bucket speed is limited.

In this modification example as well, the same effects as the above-described embodiment can be achieved. In the case of the modification example, since the flow rate of hydraulic fluid to the bucket cylinder 11 is limited by controlling the spool position of control valve 21, it is also possible to make pump 19 a fixed displacement type.

The above-described embodiments are illustrative for explaining the present invention and are not intended to limit the scope of the present invention to those embodiments only. Those skilled in the art can implement the present invention in various other aspects without departing from the gist of the present invention.

### Reference Signs List

1: Undercarriage (main body), 2: Upper structure (main body), 3: Front work implement, 4: Operating room, 5: Boom, 6: Arm, 7: Bucket, 8: Thumb attachment, 9: Boom cylinder, 10: Arm cylinder, 11: Bucket cylinder, 12: Thumb cylinder, 13: Vehicle body controller (controller), 14: Bucket control lever (bucket operation device), 15: Thumb operation pedal (thumb attachment operation device), 16: Monitor, 17: Switch, 18: Engine, 19,20: Pump (hydraulic pump), 21: Control valve (bucket directional control valve), 22: Control valve (thumb attachment directional control valve), 25,26: Pressure sensor, 31,32: Overload relief valve, 33: Switching solenoid valve, 34: Shuttle valve, 35: Thumb operation control section, 40: Solenoid on-off valve

## Claims

1. A work machine comprising:
a main body; and
a front work implement, that includes at least a bucket, attached to the main body;
the front work implement includes a thumb attachment that cooperates with the bucket to hold an object;
a hydraulic pump that supplies hydraulic fluid;
a bucket cylinder that drives the bucket by a discharge pressure from the hydraulic pump;
a thumb cylinder that drivees the thumb attachment by the discharge pressure from the hydraulic pump;
a bucket operation device for operating the bucket;
a bucket directional control valve that switches an operation direction of the bucket based on an operation signal from the bucket operation device;
a thumb attachment operation device for operating the thumb attachment;
a thumb attachment directional control valve that switches an operation direction of the thumb attachment based on an operation signal from the thumb attachment operation device; and
a controller having an automatic mode in which an operation of the thumb attachment is automatically controlled in conjunction with an operation of the bucket, wherein
the controller controls the thumb attachment directional control valve so that the operation of the thumb attachment is linked to the operation of the bucket only while the operation signal of the bucket is being input by the bucket operation device, in a case the automatic mode in which the operation of the thumb attachment is automatically controlled is set.

2. The work machine according to claim 1, wherein
the controller links the operation of the thumb attachment to the operation of the bucket only while the operation signal of the bucket is being input by the bucket operation device, in a case the automatic mode in which the operation of the thumb attachment is automatically controlled is set;
if the bucket is operated in the crowd direction, the thumb cylinder retracts, and an operation signal, which the thumb attachment moves in a direction away from the bucket, is output to the thumb attachment directional control valve;
if the bucket is operated in the dump direction, the thumb cylinder extends, and an operation signal, which the thumb attachment moves toward the bucket, is output to the thumb attachment directional control valve, thereby controlling the thumb attachment directional control valve.

3. The work machine according to claim 2, further comprising:
a relief valve with a variable set pressure installed between the thumb cylinder and the hydraulic pump, wherein
the controller changes the set pressure of the relief valve based on the operation input of the thumb attachment when the automatic mode is set, and controls to hold the set pressure during the automatic mode.

4. The work machine according to any one of claims 1 to 3, wherein
the controller cancels the automatic mode based on the operation input of the thumb attachment from the thumb attachment operation device during the automatic mode.

5. The work machine according to any one of claims 1 to 3, wherein
the controller limits the operation speed of the bucket during the automatic mode.

6. The work machine according to any one of claims 1 to 3, further comprising:
a monitor that displays various information to the operator, wherein
the controller displays on the monitor that the automatic mode is operated.
